(19) Europäisches Patentamt
European Patent Office
Office européen des brevets

(11) Publication number: **0 239 976**
**A2**

(12) **EUROPEAN PATENT APPLICATION**

(21) Application number: **87104702.3**

(51) Int. Cl.4: **H01M 10/39**

(22) Date of filing: **31.03.87**

(30) Priority: **31.03.86 JP 70989/86**

(43) Date of publication of application:
**07.10.87 Bulletin 87/41**

(84) Designated Contracting States:
**CH DE FR GB IT LI NL SE**

(71) Applicant: **HITACHI, LTD.**
**6, Kanda Surugadai 4-chome**
**Chiyoda-ku Tokyo 101(JP)**
Applicant: **Showa Denko Kabushiki Kaisha**
**10-12, Shiba Daimon 2-chome Minato-ku**
**Tokyo 105(JP)**

(72) Inventor: **Nishimura, Makoto**
**20-1, Mizukicho-2-chome**
**Hitachi-shi(JP)**
Inventor: **Tobita, Hirosi**
**77, Onoyasashi Nakagocho**
**Kitaibaraki-shi(JP)**
Inventor: **Nishimura, Shigeoki**
**2577-87, Higashiishikawa**
**Katsuta-shi(JP)**
Inventor: **Fujita, Kazunori**
**2650-24, Muramatsu Tokaimura**
**Naka-gun Ibaraki-ken(JP)**
Inventor: **Hishinuma, Yukio**
**8-3, Nishinarusawacho-4-chome**
**Hitachi-shi(JP)**

(74) Representative: **Patentanwälte Beetz sen. - Beetz jun. Timpe - Siegfried - Schmitt-Fumian**
**Steinsdorfstrasse 10**
**D-8000 München 22(DE)**

(54) **Molten salt secondary battery.**

(57) This invention relates to a secondary battery and, more particularly, relates to a power storage secondary battery containing a molten salt (4) as an electrolyte and at least one organic polymer (6) electrode (2) having conjugated double bonds in its main chain, which is suitable for obtaining high power, high energy density and long life.

FIG. 1

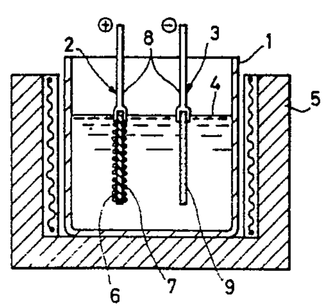


EP 0 239 976 A2

# MOLTEN SALT SECONDARY BATTERY

## BACKGROUND OF THE INVENTION

This invention relates to a secondary battery and, more particularly, to a power storage secondary battery containing a molten salt as an electrolyte and suitable for obtaining high power and high energy density.

It has been known that an organic polymer having conjugated double bonds in its main chain (hereinafter referred to as the conductive polymer) can be utilized as an electro-active material for a secondary battery because it can form an n-or p-conductor by doping it with anions (e.g., $Cl^-$, $ClO_4^-$, $BF_4^-$ or $PF_6^-$) or cations (e.g., $Li^+$, $Na^+$, or $(C_4H_9)_4N^+$) and said doping can be performed electro-chemically and reversibly. Known examples of such polymers include polyacetylene, polythiophene, poly-p-phenylene, polypyrrole, polyphenylquinoline and polyaniline, and it is described in, for example, (85/1 Lecture on Applications of Polymers/Conductive Polymers and their Applications, Summaries of Lectures (1985)) that these polymers can be used as active materials for positive or negative electrodes. Examples of references concerning secondary batteries wherein these polymers are used as electro-active materials include Japanese Patent Laid Open Nos. 136469/1981, 115777/1983, 212066/1983, 166529/1984, 133669/1985 and 133670/1985, and United States Patent Nos. 4,222,903, 4,321,114 and 4,442,187. In all of these references, said conductive polymers are used as positive electro-active materials, and alkali metals and alkaline earth metals which have high electrode potentials are used as negative electro-active materials. As the electrolytic solutions, those obtained by dissolving electrolytes such as halides, perchlorates or hexafluorophosphates in non-aqueous solvents such as methylene chloride, propylene carbonate or tetrahydrofuran are used. However, the solubility of an electrolyte in a non-aqueous solvent is low, resulting in low energy density.

On the other hand, there is a battery wherein a molten salt of an alkali metal halide is used as an electrolyte, which is one of the batteries wherein an alkali metal or an alkaline earth metal is used as a negative electro-active material. Examples of references concerning them include Japanese Patent Laid-Open Nos. 9226/1976, 39124/1980 and 169075/1984 and Japanese Patent Publication Nos. 9787/1981 and 48512/1984. These batteries suffer from problems of high temperature (350° C. or above) of a molten salt or deterioration of a positive electro-active material, so that studies on their materials are now being made. However, in such molten salt batteries, no studies have been conducted on conductive polymers.

The above-mentioned two problems of prior art each have advantages and disadvantages. Namely, the battery in which an electro-conductive polymer is used as the positive electrode, an alkali metal or an alkaline earth metal is used as the negative electrode and a solution formed by dissolving an electrolyte in a non-aqueous solvent is used as the electrolytic solution has advantages in that it can be operated at ordinary temperature, that the electrode reactions are not accompanied by side reactions and that a high battery voltage (2.5 V or higher) can be obtained, but that the volume of the electrolytic solution is increased because the solubility of the electrolyte is lower than that in water. The solvent does not take part in electrode reactions, which causes a decrease in the quantity of energy charged per unit weight. Therefore, no remarkable improvement in energy density can be expected. Furthermore, the deposition of metallic dendrites is observed on the surface of the negative electrode during charging, which causes a problem in that the deposits peel off and cause damage to the negative electrode and a decrease in the current efficiency or short circuit takes place where both electrodes are situated close together in, for example, a sheet battery.

On the other hand, the battery wherein a molten salt is used as the electrolyte has advantages that a high energy density can be obtained by using only a small amount of an electrolyte and that the current efficiency is large because the molten salt is the electrolyte itself, but it has disadvantages in that its operation temperature is high (350° C. or above) or its battery voltage is low (about 1.2 V). Furthermore, its life is short because $Li_2S$ formed in the electrode reaction ($FeS + 2Li \rightarrow Li_2S + Fe$) of the positive electro-active material (FeS, NiS or the like) is dissolved in the molten salt to cause the positive electrode to deteriorate.

## SUMMARY OF THE INVENTION

It is an object of this invention to provide a molten salt secondary battery of high power and high energy density by using an inorganic salt capable of being molten by raising its temperature and containing anions which can be absorbed by the positive electro-active material during charging with electric energy and released therefrom during discharging as the electrolyte and using an organic polymer having conjugated double bonds in its main chain and being chemically and thermally stable against said inorganic salt as at least the positive electro-active material.

## BRIEF DESCRIPTION OF THE DRAWINGS

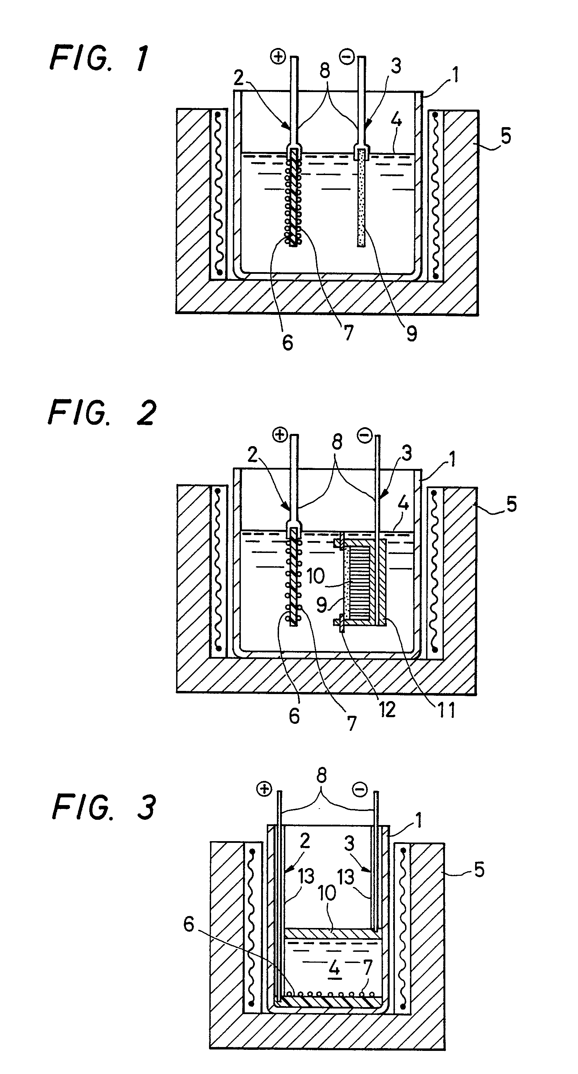

Figs. 1, 2 and 3 are sectional views of molten salt secondary batteries according to the present invention.

## DESCRIPTION OF THE PREFERRED EMBODIMENT

In order to attain the above purposes, it is an objective to lower the melting temperature of a molten salt. The melting temperature of a molten salt of a conventional alkali metal halide is as high as 350° C. or above, and the upper limit (a temperature at which chemical reactions such as decomposition or elimination of substituents begin) of the heat resistance temperature of a conductive polymer is about 200° C., so that it is necessary to lower the melting temperature to about 150° C. This can be realized, as disclosed in, for example, Japanese Patent Laid-Open No. 39124/1980, by mixing an alkali metal halide with other salts to lower the melting temperature by freezing point depression. Although preferable salts to be mixed are aluminum halides of a low melting point (250° C. or below), any salts which have a relatively low melting point and can depress the melting point of a mixture to 200° C. or below when mixed with the alkali metal halide can be used in addition to the aluminum halides. Further, at least two of the above salts may be used together. When the above salts contain water, they greatly influence electrodes, especially a negative electrode, so that it is preferable that the water content be low (1,000 ppm or below). Further, for some negative electrodes, it is desirable that the content of oxygen dissolved in a salt be as low as the above value.

Next, it is necessary to select a conductive polymer which is chemically and thermally stable against the inorganic salt. Preferred polymers are those having conjugated double bonds in their main chain, especially conductive polymers having aromatic rings (phenyl or naphthyl groups) in their main chain, since these polymers do not undergo structural changes characteristic of polymers, such as cleavage of main chains or destruction of conjugated double bonds by electro-chemical reactions, so that these polymers are chemically stable and relatively resistant to heat and do not undergo reactions such as decomposition even at about 180° C. Among such polymers in accordance with this invention, those which have high performance of being doped and undoped with anions are selected.

It has been found that polyaniline which is a polymer of aniline ($C_6H_5NH_2$) is suitable as the conductive polymer, since conductive polymers having nitrogen atoms in the main chain have a high capacity of being doped with anions; i.e., a high capacity to receive or accept anions, and show a high performance of being doped with anions or undoped. Polyaniline can be obtained by, for example, polymerizing aniline by electrolytic oxidation in an aqueous HCl solution by using platinum as a cathode. One of the representative synthetic methods is described in, for example, J. Amer. Chem. Soc. , Vol. 84, pp.3618f (1962). Although the structure of the obtained polyaniline is represented by

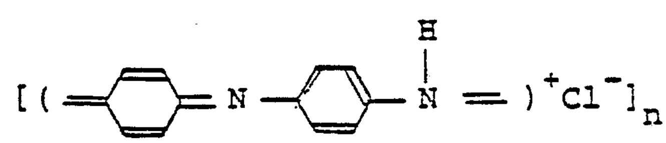

any polymer having a structure represented by the general formula (wherein $X^-$ is an anion)

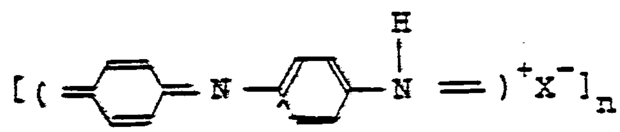

may be used. Concerning its synthesis, a chemical synthetic method in which a monomer is polymerized by pouring an oxidizing agent little by little into a solution in which the monomer is dissolved may also be adopted. One of the representative synthetic methods is described in, for example, J. Polymer Science. Part C, pp. 1187f (1969).

However, the conductive polymer is not limited to the polyaniline, but any of the polyacetylenes disclosed in Japanese Patent Laid-Open No. 136469/1981 and conductive polymers containing aromatic rings in the main chain, such as polypyrrole, polythiophene, and poly-p-phenylene may be used.

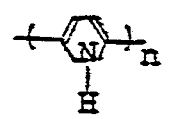 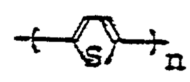 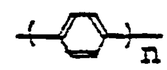

With respect to the polyanilines, polymers of an aniline having a substituent such as an alkyl group as a side chain, such as 2-methylaniline, N-methylaniline or N-methyl-2-methylaniline

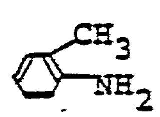 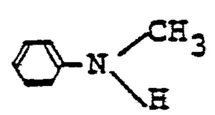 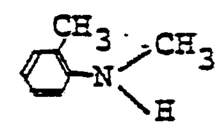

may also be used. Further, a combination of at least two of the above conductive polymers may also be used. In order to improve the electric conductivity of the conductive polymer, it is also possible to add carbon (carbon black or graphite) powder or fiber thereto. It is also possible to add a binder as a molding aid to the conductive polymer. As the binder, one which is not dissolved in the molten salt or which does not react with the molten salt must be selected. Further, in order to improve the electric conductivity and mechanical strength of the conductive polymer, it is also possible to use a collecting gauze. If it is to be used, one which is not dissolved in the molten salt or which does not react with the molten salt must be selected. Further, it need not be in the form of a gauze, but may be in the form of a porous plate or a simply perforated plate. The material is not limited to metal, but other materials such as carbon and organic substances can also be used so far as they can meet the above requirements.

Molecular weight determination by liquid chromatography revealed that 30% of the total of the conductive polymers which could be applied to the battery of this invention had a molecular weight of 1,000 to 1,000,000 and the balance (70%) of the total had a molecular weight of 1,000,000 or higher.

With respect to the materials for negative electrodes of the battery of this invention, metallic electrodes may be cited first. In order to prevent the deposition dendrites on this negative electrode during charging, the negative electrode is made porous or a negative electro-active material having a low melting point is selected. The porous negative electrode is not particularly limited so far as it contains a negative electro-active material, is a material which does not undergo deformation, softening or fusion at the melting temperature of the molten salt, and takes a form which can provide a larger surface area. The negative electro-active material of a low melting point may be a single metal or an alloy which can melt at a temperature lower than the melting temperatures of the molten salt and have a high electrode potential. In addition, as the negative electrode, one formed by doping a conductive polymer with cations may also be used as in the case of the positive electrode. As the conductive polymer in this case, unlike the case of the conductive polymer for the positive electrode, one which is efficiently doped or undoped with cations, has high heat resistance and does not react with the molten salt is selected. With respect to the cations with which the conductive polymer is doped, those having high negative electrode potentials are desirable. Therefore, alkali metal ions are suitable, but in addition to alkali metal ions, ions of an element having an electro-negativity close to that of an alkali metal, complex ions with other elements ($(C_4H_9)_4N^+$) or a mixture

of at least two of the above-mentioned species may also be used. As in the case of the conductive polymer for the positive electrode, it is also possible to mix the conductive polymer with carbon polymer or fiber or to add a binder thereto. In this way, it is possible to produce a battery having high power, high energy density and long life.

It is possible to preserve the battery of this invention for a very long time by decreasing the temperature less than the melting point of the molten salt after charging. Such preservation causes no deterioration of the electrodes and no energy loss or self-discharge until the use of the battery by increasing the temperature more than the melting point.

Because salts can be considered to be completely ionized in a molten state, the volume of the electrolytic solution can be reduced as compared with that where a non-aqueous solvent is used.

Thermal deterioration of the conductive polymer is small since the temperature of the molten salt is lower than the critical heat resistance temperature of the conductive polymer for the positive electrode and/or the negative electrode. Furthermore, during charging or discharging, electro-chemical doping or undoping with anions and/or cations takes place and no side reactions occur at this time, so that no deterioration of the positive electrode and/or the negative electrode occurs.

When a metal is used as the negative electrode, it is brought into a state of a porous body or a melt, so that dendrite formation during charging rarely occurs.

The invention will be further understood from the following examples:

Example 1

An example of this invention is described with reference to Fig. 1. A cell 1 is heated in an electric furnace 5 to a temperature which is higher than the melting temperature of an electrolyte 4. The material of the cell 1 may be any one so far as it is unreactive with the electrolyte 4. A positive electrode is composed of a conductive polymer 6, a collecting gauze 7 and a terminal 8. The conductive polymer 6 in this example was polyaniline prepared by polymerizing aniline dissolved in an aqueous HCl solution by electrolytic oxidation. This polyaniline was mixed with 10 wt. %, based on the polyaniline, of carbon black and polyfluoroethylene as a binder and the obtained mixture was molded. A collecting gauze 7 made of stainless steel was used. The terminal 8 is preferably one made of a material which can support the conductive polymer 6 in the electrolyte 4, is unreactive with the electrolyte and has a low electric conductivity. The method for supporting the terminal 8 is not particularly limited. In this example, a stainless steel rod was used. The negative electrode 3 was composed of a terminal 8 and a porous body 9. The porous body 9 was one formed by impregnating porous carbon with lithium having the highest electrode potential among all of the alkali metals and molding the porous carbon. The electrolyte 4 was a mixture having a melting point of 110° C. and was obtained by mixing lithium chloride with aluminum chloride at a molar ratio of 2:3. The molten salt was one having a water content of 1,000 ppm or below. Dissolved oxygen was removed therefrom by nitrogen blowing. This battery was charged by constant potential charging at a voltage of 4.0 V for one hour and discharged until the battery voltage was decreased to 2.0 V. This cycle was repeated at least 200 times.

Table 1

| Electrolyte | Discharge Voltage (V) | Energy Density (Wh/kg) |
|---|---|---|
| $LiCl-AlCl_3$ | 2.8 | 200 - 240 |
| $LiBF_4$ - non-aqueous solvent | 3.0 | 80 - 120 |
| LiCl-KCl | 1.7 | 150 - 180 |

Table 1 shows the average discharge voltages and calculated effective energy densities for the purpose of comparison among, in the case of this example, the case where a 2 mol/l-concentration solution formed by dissolving lithium borofluoride ($LiBF_4$) in a non-aqueous solvent is used as an electrolyte and the case where a mixture having a melting point of 400° C. was formed by mixing lithium chloride with potassium chloride at a molar ratio of 2:3. The degree of doping of polyaniline was 50 mol % per aniline unit. Although the energy densities vary according to the structure of the electrodes and the volumes of the electrolytes, it can be seen that higher energy density can be obtained in the case where the molten salt is used than in the case where the non-aqueous solution is used. Further, with respect to the discharge voltages, higher values can be obtained by using the conductive polymer as the positive electrodes Thus, this example makes it possible to provide a battery having high power and high energy density.

Example 2

A cell similar to that used in Example 1 was employed in this example. The conductive polymer 6 was prepared by polymerizing 2-methylaniline, a derivative of aniline, by electrochemical oxidation in the same manner as in Example 1. Scarcely any difference in the discharge voltage and energy densities could be observed between this case and the case wherein polyaniline was used.

Example 3

A cell similar to that used in Example 1 was employed in this example. The electrolyte 4 was a 1:4 molar ratio mixture of lithium bromide and aluminum bromide. Although the melting temperature of this salt mixture was 95° C., which was lower than the case where the corresponding chlorides were used in Example 1, the battery voltage was lower (2.5 V).

Example 4

A cell similar to that employed in Example 1 was used in this example. The positive electrode was one formed by mixing polyaniline with 10 wt. % of carbon fiber in place of carbon black and adding a binder thereto.

Table 2

| Mixture | Discharge Voltage (V) | Energy Density (Wh/kg) |
|---|---|---|
| Carbon Black | 2.8 | 200 - 240 |
| Carbon Fiber | 2.8 | 200 - 240 |

Table 2 indicates the results of a comparison between the performance of the batteries of this example with that of Example 1. No change is recognized between their discharge voltages or energy densities. Thus, the battery performances are not adversely affected.

Comparative Example 1

A cell similar to that employed in Example 1 was used in this example. Polyaniline was molded without mixing it with carbon black. Although the performance of the battery was not adversely affected, its discharge took a longer time than in the case where carbon black was added to aniline.

Comparative Example 2

A cell similar to that used in Example 1 was employed in this example. Polyaniline was molded without adding a binder (polyfluoroethylene) thereto. Although the performance of the battery was not adversely affected, the polyaniline was partially peeled off and the current efficiency was decreased after repeated charge/discharge cycles.

Comparative Example 3

A cell similar to that used in Example 1 was employed in this example. Polyaniline was molded without attaching any collecting gauze thereto. Although the performance of the battery was not adversely affected, the polyaniline was deformed after repeated charge/discharge cycles. Therefore, in order to prevent the positive electrode from being deformed, it is preferable to attach a gauze to at least one side of the polyaniline.

Comparative Example 4

A cell similar to that employed in Example 1 was used in this example. The electrolyte 4 was one having a water content of 1,000 ppm or above. Although the performance of the battery was not adversely affected during the initial stage, the surface of the negative electrode was whitened and the discharge voltage was decreased after repeated charge/discharge cycles.

Comparative Example 5

A cell similar to that used in Example 1 was employed in this example. The electrolyte 4 was one from which dissolved oxygen had not been removed. The performance of the battery was not adversely affected during the initial stage; however, the surface of the negative electrode was blackened and the discharge voltage was decreased after repeated charge/discharge cycles.

Example 5

A cell similar to that used in Example 1 was employed in this example. The porous body 9 was one formed by machining a 1:1 molar ratio lithium-aluminum alloy. Although the performance of the battery did not seem to be adversely affected to any great extent, slight deposition of dendrites which was observed during charging where porous carbon-lithium was used, was not observed.

Example 6

Another example of this invention will now be described with reference to Fig. 2. A cell, a positive electrode 2 and an electric furnace 5 are the same as those used in Fig. 1. A negative electrode 3 is composed of a terminal 8, a porous body 9, a molten negative electro-active material 10, an active material container 11 and a pin 12. The porous body 9 was one made of a material which was not reactive with either the electrolyte 4 or the negative electro-active material 10 and had a structure which did not permit the negative electro-active material to pass therethrough, but permitted ions of the active material to pass therethrough. Porous glass was employed in this example. A negative electro-active material 10 comprising sodium having a melting point of 90° C. was used in this example. Accordingly, a 2:3 molar ratio mixture,

having a melting point of 115° C., of sodium chloride and aluminum chloride was used as the electrolyte 4. The active material container 11 and the pin 12 were those which were made of materials which were not reactive with either the electrolyte 4 or the negative electro-active material, and were highly conductive and light-weight. Graphite was used in this example. The surface of the material container 11 is not particularly limited so far as it is one from which the negative electro-active material 10 cannot leak. Therefore, the pin need not be employed.

Table 3

| Negative Electrode | Discharge Voltage (V) | Energy Density (Wh/kg) |
|---|---|---|
| Porous body + metal | 2.8 | 200 - 240 |
| Molten metal + container | 2.5 | 160 - 200 |

Table 3 indicates the discharge voltages and energy densities of the batteries of this example compared with the discharge voltages and energy densities of the batteries of Example 1. Although the battery according to this example has drawbacks, i.e., it is heavier in weight with the consequent lower energy density due to the negative electrode 3 having the active material container 11 and the discharge voltage is lower (2.5 V) because sodium is used as the negative electrode material, its life is longer because it is effective in preventing the deposition of dendrites of the negative electro-active material, which occurs during charging of the battery, even when charge/discharge cycles are repeated at least 200 times and, therefore, preventing decrease in the life due to short circuiting between the electrodes.

Example 7

Still another example of this invention will now be described with reference to Fig. 3. A cell 1 and an electric furnace 5 employed in this example were similar to those utilized in Fig. 1, even though they were reduced in size. An electrolyte 4, a conductive polymer 6 and a negative electro-active material 10 were identical with those shown in Fig. 2. the positive electrode 2 was composed of a conductive polymer 6, a collecting gauze 7, a terminal 8 and an insulator 13. the conductive polymer 6 was placed on the bottom of the cell 1 with its surface to which the collecting gauze was attached being in the upper position. The terminal 8 came into contact with the electrolyte 4 and the negative electrode 3, so that it was coated with an insulator 13 for preventing short circuiting. Any insulator 13 may be used so far as it is one which is made of a material which is not reactive with either the electrolyte 4 or the negative electro-active material 10, and has a high insulation performance. Glass was employed in this example. The negative electrode 3 was composed of a terminal 8, a negative electro-active material 10 and an insulator 13, and the negative electro-active material 10 was molten as in Example 6.

Table 4

| Negative Electrode | Discharge Voltage (V) | Energy Density (Wh/kg) |
|---|---|---|
| Molten metal + container | 2.5 | 160 - 200 |
| Molten metal | 2.5 | 200 - 240 |

Referring to Table 4, the discharge voltages and energy densities of this example are compared with those found in Example 6. In the battery of this example, the negative electro-active material 10, unlike that in Example 6, requires no container. Furthermore, because the conductive polymer 6 and the negative electro-active material 10 are spread over the entire surface of the liquid, the area of the electrode is widened and the cell can be reduced in size. Therefore, the energy density can be increased as compared with that in Example 6.

Example 8

A cell 1 which was similar to that used in Example 6 was employed in this example. The electrolyte 4 was a 66:14:20 molar ratio mixture of sodium chloride, potassium chloride and aluminum chloride. The melting temperature was lowered to 93° C. and the energy density was increased by about 10%.

Example 9

A cell similar to that employed in Example 6 was used in this example. The negative electro-active material 10 was a 1:1 molar ratio potassium/sodium alloy. The melting temperature can be lowered to 40° C. and the energy density is improved by about 15%.

Example 10

An example in which a conductive polymer is used as the negative electrode will now be described with reference to Fig. 1. A cell, a positive electrode 2, an electrolyte 4 and an electric furnace were identical to those used in Example 1. The negative electrode 3 had a structure similar to that of the positive electrode 2 and was composed of a conductive polymer 6, a collecting gauze 7 and a terminal 8. The conductive polymer 6 was poly-p-phenylene which was a polymer of phenyl groups in this example. This polymer was synthesized from benzene by the method described by P. Kovacic and A. Kyriakis in the Journal of the American Chemical Society, Vol. 85, pp. 454-458 (1963). Although the collecting gauze 7 used in this example was made of stainless steel, such gauze need not be employed because, like the positive electrode, it was used for the purpose of improving electric conductivity and mechanically supporting the conductive polymer 6, and does not take part in electrode reactions.

Table 5

| Negative Electrode | Discharge Voltage (V) | Energy Density (Wh/kg) |
|---|---|---|
| Porous body + metal | 2.8 | 200 - 240 |
| Conductive polymer | 2.8 | 200 - 260 |

The discharge voltages and energy densities of the batteries of this example are compared with those in Example 1 in Table 5. The battery of this example can shown an improved energy density because, when a conductive polymer is used as the negative electrode, it can be reduced in weight more extensively than when a porous body is employed. Furthermore, as with the positive electrode, the negative electrode can be electrochemically doped or undoped with cations, so that no side reactions occurs. Therefore, no dendrite is deposited even when charge/discharge cycles were repeated at least 200 times. Therefore, it is possible to provide a battery having higher energy density and longer life.

Further investigation was conducted with respect to the organic polymer of this invention. The result is shown in Table 6.

With respect to the heat resistance of polyaniline and poly-p-phenylene, there were no variations in the molecular structure of such compounds at a temperature of 150° C. However, there was slight deterioration in the molecular structure of polypyrrole and polythiophene at a temperature of 80° C.

With respect to the degree of doping of the organic polymer, polyaniline showed the 60% doping for halogen ions such as $Cl^-$ and $Br^-$. However, other polymers showed only the 40% doping for the halogen ions.

Concerning coulomb efficiency, which is the degree of doping and undoping of ions to the polymer, polyaniline showed almost 100% coulomb efficiency. Poly-p-phenylene showed a slight additive reaction of halogen ion at a temperature of 150° C.

The above-mentioned experimental results indicate that polyaniline, which is a polymer of aniline ($C_6H_5NH_2$), is the most suitable conductive polymer of this invention.

Table 6

| Polymer | Heat Resistance | Doping Degree | Coulomb Efficiency |
|---|---|---|---|
| Polyaniline | □ | □ | □ |
| Poly-p-phenylene | □ | △ | □ |
| Polypyrrole | △ | △ | △ |
| Polythiophene | △ | △ | △ |

□ = good

△ = fair

According to this invention, it is possible to obtain a secondary battery of high density by utilizing a molten salt as the electrolyte of the battery, because the volume of the electrolyte can be reduced as compared with the volume of an electrolytic solution formed by dissolving an electrolyte in a non-aqueous solvent.

In addition, according to this invention, it is possible to obtain a battery of high power by lowering the melting point of a molten salt, because conductive polymers can be used as the positive electrode and/or the negative electrode.

Furthermore, even when a metal is selected as the negative electro-active material, no side reaction occurs, so that a non-deteriorative electrode can be obtained.

Additionally, it is possible to preserve this battery for a very long life by decreasing the temperature to less than the melting point of the molten salt after charging. Such preservation causes no deterioration of the electrodes and no energy loss or self-discharge until the use of the battery by increasing the temperature above that of the melting point.

## Claims

1. A molten salt secondary battery comprising a positive electrode (2) having a positive electro-active material (6), a negative electrode (3) having a negative electro-active material (9) and means (1) for holding an inorganic salt (4) between said positive electrode (2) and said negative electrode (3), said inorganic salt (4) being capable of being molten at elevated temperatures and containing anions which can be absorbed by the positive electro-active material (6) during charging with electric energy and released therefrom during discharging, wherein at least said positive electro-active material (6) comprises an organic polymer having conjugated double bonds in its main chain and in that said polymer is chemically and thermally stable against said inorganic salt (4).

2. A molten salt secondary battery according to claim 1, wherein said positive electro-active material (6) comprises an organic polymer having aromatic rings in its main chain.

3. A molten salt secondary battery according to claim 1, wherein said positive electro-active material (6) comprises a polymer of an aniline.

4. A molten salt secondary battery according to claim 1, wherein said positive electro-active material (6) is polyaniline.

5. A molten salt secondary battery comprising a positive electrode (2) having a positive electro-active material (6), a negative electrode (3) having a negative electro-active material (9), and means (1) for holding an inorganic salt (4) between said positive electrode (2) and said negative electrode (3), said inorganic salt (4) being capable of being molten at elevated temperatures, and containing ions which can be absorbed by or released from at least either of said electro-active materials (6, 9) during charging with electric energy or discharging, characterized in that said electro-active material (6) comprises an organic polymer having conjugated double bonds in its main chain and in that said polymer is chemically and thermally stable against said inorganic salt.

6. A molten salt secondary battery comprising a positive electrode (2) having a positive electro-active material (6), a negative electrode (3) having a negative electro-active material (9), and means (1) for holding an inorganic salt between said positive electrode (2) and said negative electrode (3),
said inorganic salt (4) being solid under room temperature and being capable of being molten by raising its temperature and containing anions which can be absorbed by the positive electro-active material (16) during charging with electric energy and released therefrom during discharging,
characterized in that at least said positive electro-active material (6) comprises an organic polymer having conjugated double bonds in its main chain and in that said polymer is chemically and thermally stable against said inorganic salt.

7. A molten salt secondary battery comprising a positive electrode (2) having a positive electro-active material (6), a negative electrode (3) having a negative electro-active material (9), and means (1) for holding an inorganic molten salt (4) between said positive electrode (2) and said negative electrode (3),
said inorganic molten salt (4) being in a solid state under room temperature and being capable of being molten at less than 200° C and containing anions which can be absorbed by the positive electro-active material (6) during charging with electric energy and released therefrom during discharging,
characterized in that at least said positive electro-active material ( 6) comprises an organic polymer having conjugated double bonds in its main chain and in that said polymer is chemically and thermally stable against said inorganic salt (4).

8. A molten salt secondary battery comprising a positive electrode (2) having a positive electro-active material (6), a negative electrode (3) having a negative electro-active material (9), and means for holding an inorganic molten salt (4) between said positive electrode (2) and said negative electrode (3),
said inorganic molten salt (4) being in a solid state under room temperature, being capable of being molten at less than 200° C, having a water content of 1000 ppm or below, having no dissolved oxygen, and containing anions which can be absorbed by the positive electro-active material (6) during charging with electric energy and released therefrom during discharging,
characterized in that at least said positve electro-active material (6) comprises an organic polymer having conjugated double bonds in its main chain and in that said polymer is chemically and thermally stable against said inorganic salt (4).

FIG. 1

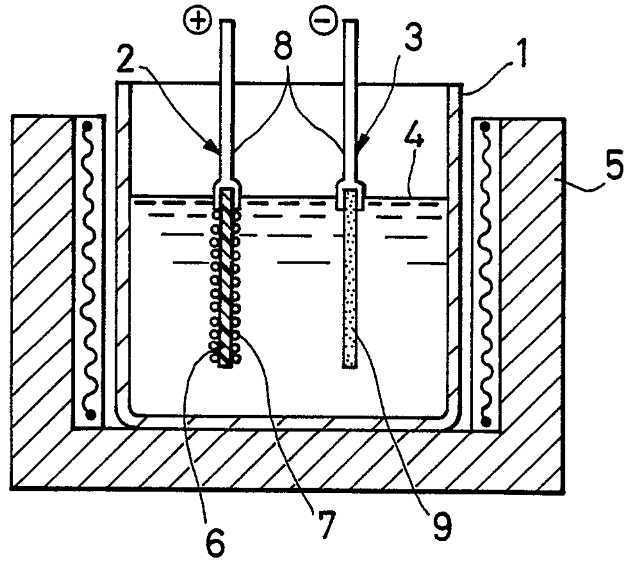


FIG. 2

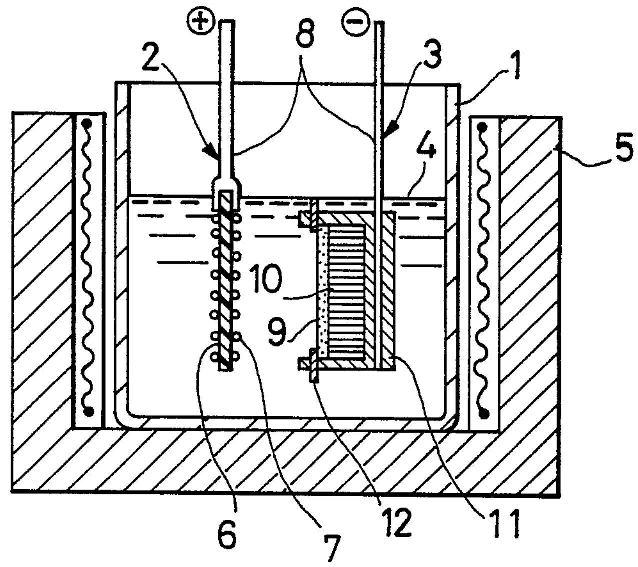


FIG. 3